# FASCICULE DE BREVET EUROPEEN

(11) **EP 4 132 889 B1**
(45) Date de publication et mention de la délivrance du brevet: **01.05.2024**
(21) Numéro de dépôt: 21723325.3
(22) Date de dépôt: 01.04.2021
(51) Int. Cl.: C03C 3/087, C03C 4/20

(54) **COMPOSITION DE VERRE CULINAIRE A BASSE TENEUR EN BORE**
KOCHGLASZUSAMMENSETZUNG MIT NIEDRIGEM BORGEHALT
CULINARY GLASS COMPOSITION WITH LOW BORON CONTENT

(30) Priorité: 10.04.2020 FR 2003647
(43) Date de publication de la demande: 15.02.2023
(73) Titulaire: Arc France, 62510 Arques (FR)
(72) Inventeur: DELAVAL, Rodolphe, 62510 Arques (FR); DONZE, Sébastien, 62510 Arques (FR)
(74) Mandataire: Cabinet Netter
(86) Numéro de dépôt international: PCT/FR2021/050585
(87) Numéro de publication internationale: WO 2021/205100

(56) Documents cités:
- EP-A1- 1 270 524
- EP-A1- 1 726 573
- EP-A1- 1 867 612
- WO-A1-98/40320
- FR-A1- 2 764 596
- JP-A- 2006 062 929
- US-A- 3 709 705
- US-A- 3 764 283
- US-A1- 2014 323 286

## Description

La présente invention concerne le domaine du verre culinaire pour cuisson.

En verrerie, il existe des verres de composition spécifique répondant à des cahiers des charges particuliers. Certains verres pharmaceutiques doivent résister à des agents chimiques précis. Les verres optiques présentent des longueurs d'ondes choisies de transmission de la lumière visible ou non visible. Les verres industriels répondent à des exigences variées.

Dans le domaine du verre ménager, le verre culinaire de cuisson se distingue du verre à boire par une exigence de résistance aux chocs thermiques. Ainsi, un met peut être cuit et présenté à table dans un même plat en verre.

Certains articles à usage culinaire de cuisson contiennent de fortes proportions massiques d'oxyde de bore environ 11 à 13%. Le terme les désignant au grand public est « verre borosilicate ». Le bore réduit en général le coefficient de dilatation et améliore la résistance aux chocs thermiques. Toutefois, l'élaboration d'un verre contenant du bore nécessite des équipements de production spéciaux, des réfractaires très résistants et une température de fusion élevée. Il en résulte un bilan énergétique médiocre.

D'autres articles à usage culinaire présentent une composition sodo-calcique voisine des verres à boire et font l'objet d'une trempe forte générant des contraintes résiduelles élevées dans le verre. Le coefficient d'expansion thermique est d'environ 90.10⁻⁷ K⁻¹. Le verre est alors résistant aux chocs thermiques dans une plage précise de température et/ou de variation de température mais, en cas de dépassement de la plage, alors le bris du verre libère une énergie importante et un effet parfois qualifié d'explosion avec projection de nombreux fragments de verre et bruit significatif.

Les documents US 2014/323286 A1, FR 2 764 596 A1, US 3 709 705 A, JP 2006 062929 A et US 3 764 283 A décrivent des compositions de verre.

La Demanderesse a cherché à améliorer la situation.

La Demanderesse a mené des recherches en vue d'offrir un article culinaire de cuisson apte à être produit dans un four de verre sodo-calcique dans des conditions de fonctionnement normales tout en présentant une bonne résistance aux chocs thermiques et un risque d'explosion réduit à l'utilisation.

La composition suivante de verre culinaire de cuisson à basse teneur en bore a été retenue, en masse : SiO₂ + Al₂O₃ plus de 73,0%, CaO + MgO au moins 8,0%, SiO₂ de 70,0 à 78,0%, Na₂O de 8,0 à 12,0%, CaO de 4,0 à 8,0%, Al₂O₃ moins de 5,0%, MgO de 3,0 à 11,0 %, K₂O moins de 2,0%, SrO moins de 5,0%, SO₃ moins de 0,25% et B₂O₃ moins de 0,20% La composition présente une température de transition vitreuse Tg inférieure à 700°C, un coefficient de dilatation inférieur à 75,0 10⁻⁷ K⁻¹, et une tension thermique spécifique inférieure à 0,75 MPa/K. Ledit coefficient de dilatation est favorable à l'obtention d'un état de contrainte dans le verre fini réduisant les risques d'explosion à l'utilisation. La composition peut être produite dans un four à verre sodo-calcique.

La température de transition vitreuse Tg est préférablement inférieure à 640°C. La température de transition vitreuse Tg peut être mesurée selon la norme ISO 7884-8:1987. Le protocole peut être identique pour la mesure du coefficient de dilatation ou CET. Le CET est mesuré selon la norme ISO 7991 :1987.

Dans un mode de réalisation, le point de fusion est inférieur à 1600°C, préférablement inférieur à 1570°C.

Dans un mode de réalisation, la composition comprend en masse : SiO₂ + Al₂O₃ plus de 76,0%.

Dans un mode de réalisation, la composition comprend en masse : CaO + MgO au moins 9,0%.

Dans un mode de réalisation, la composition comprend en masse : SiO₂ de 72 à 78,0%.

Dans un mode de réalisation, la composition comprend en masse : CaO 4,0 à 8,0 %.

Dans un mode de réalisation, la composition comprend en masse : Al₂O₃ de 1,0 à 5,0%

Dans un mode de réalisation, la composition comprend en masse : SrO moins de 1,5%.

Dans un mode de réalisation, la composition est sans apport volontaire de B₂O₃.

Dans un mode de réalisation, la composition comprend en masse : SiO₂ de 74,0 à 76,0%.

Dans un mode de réalisation, la composition comprend en masse : Na₂O de 10,0 à 12,0%.

Dans un mode de réalisation, la composition comprend en masse : Al₂O₃ de 1,6 à 4,0%, notamment 2,0 à 4,0%, préférablement 1,7 à 3,0%.

Dans un mode de réalisation, la composition comprend en masse : MgO de 3,0 à 5,0 %.

Dans un mode de réalisation, la composition comprend en masse : K₂O moins de 1,0%.

Dans un mode de réalisation, la composition comprend en masse : SrO au plus 1,0%.

Dans un mode de réalisation, la composition comprend en masse : SO₃ moins de 0,25%. Le sulfate étant utilisé en tant qu'affinant se retrouve en partie dans les fumées dans le cas d'un four à combustion, puis est capté dans les systèmes de traitement desdites fumées. Les matières premières en entrée de four de verrerie comprennent généralement une proportion massique de sulfate supérieure à la proportion massique de sulfate dans le verre.

Dans un mode de réalisation, la composition comprend en masse : B₂O₃ moins de 0,20%.

Dans un mode de réalisation, la composition présente une température de transition vitreuse Tg inférieure à 610°C, préférablement inférieure à 590°C.

Dans un mode de réalisation, la composition présente un point de ramollissement PR inférieur à 660°C, préférablement inférieur à 650°C.

Dans un mode de réalisation, la composition présente une densité supérieure à 2,30 et inférieure à 2,48.

Dans un mode de réalisation, la composition comprend en masse : CaO de 5,0 à 6,5%.

Dans un mode de réalisation, la composition est sans apport volontaire de BaO.

Dans un mode de réalisation, la composition est sans apport volontaire de TiO₂.

Dans un mode de réalisation, la composition est sans apport volontaire de ZrO₂.

Dans un mode de réalisation, la composition est sans apport volontaire de SnO₂.

Dans un mode de réalisation, la composition est sans apport volontaire de ZnO.

Dans un mode de réalisation, la composition est sans apport volontaire de Cl.

Dans un mode de réalisation, la composition est sans apport volontaire d'As.

Dans un mode de réalisation, la composition sans apport volontaire de Sb.

Dans un mode de réalisation, la composition comprend moins de 0,20% de CeO₂.

Dans un mode de réalisation, la composition comprend moins de 0,10% de SO₃, préférablement moins de 0,05%.

Dans un mode de réalisation, la composition présente une température de transition vitreuse Tg inférieure à 585°C.

Dans un mode de réalisation, la composition présente un coefficient de dilatation inférieur à 74,0 10⁻⁷ K⁻¹.

Dans un mode de réalisation, la composition est sans apport volontaire de F. Dans un mode de réalisation, la composition est sans apport volontaire de Pb.

Dans un mode de réalisation, l'oxyde de strontium est substitué par un mélange d'oxydes de calcium et de magnésium.

La composition réunit les caractéristiques de coefficient d'expansion thermique inférieur à 75,0.10⁻⁷ K -1, de point de ramollissement < 675°C, de température de fusion pratique <1500°C mesurée dans le bain de verre, de qualité de verre correcte avec un affinage réalisé avec du sulfate de sodium, de compatibilité avec le procédé de centrifugation pour la mise en forme de l'article.

La centrifugation s'est révélée plus aisée avec la formulation définie par les plages étroites ci-dessus, et celle-ci a conduit aux meilleures performances thermiques.

Certains verres sont évoqués par ailleurs dans d'autres domaines que celui des arts culinaires, avec de faibles coefficients d'expansion thermique et d'autres exigences. C'est notamment le cas pour certains verres d'écrans type LCD, certains verres neutres à haute résistance hydrolytique. Il s'agit souvent de verres pauvres en oxydes alcalins mais riches en alumine et en alcalinoterreux (CaO, BaO, SrO..) mais qui ne sont exploités qu'en verre plat et/ou recuit et/ou au stade laboratoire. On note dans plusieurs cas la présence en faible proportion d'oxydes d'étain et de chlore, éléments devant correspondre aux agents affinant, souvent utilisés pour les verres peu fusibles.

Sur une base proche de celle des vitrocéramiques type LAS (lithium-aluminium-silicium), des verres dont le coefficient d'expansion thermique est similaire à celui du borosilicate (30 à 40.10⁻⁷ K⁻¹) ont été développés pour la protection thermique de la porte du four ménager. De tels verres sont exempts de bore et contiennent des taux d'alcalin très faible essentiellement du lithium (<2%) et certains oxydes particuliers (TiO2, BaO, ZrO2...).... Ce type de composition ne représente pas une alternative réaliste car partageant peu d'éléments avec le verre sodocalcique et exigeant des installations de mélange, de fusion et de mise en forme dédiées.D'autres travaux évoquent la résistance au choc thermique du verre en tant que matériau et proposent d'aborder cette notion par le calcul de la «tension thermique spécifique» selon « Fundamental of inorganic glasses », second édition, A. K. Varshneya p 258-262 ou FR 2 791 343. Ce paramètre, prend en compte le module d'élasticité E et le coefficient de poisson u en plus du coefficient d'expansion thermique CET. La tension thermique spécifique est calculée selon la formule : E x CET/(1-u).

La tension thermique spécifique est un paramètre reflétant la résistance aux changements de température.

D'autres auteurs prennent également en compte la notion de contrainte interne liée au refroidissement, mais pour des cas simples comme le verre plat. Cette approche n'est pas applicable au contexte d'articles creux de forme complexe et multiple.

La Demanderesse a identifié que la résistance aux chocs thermiques des articles en verre est liée à plusieurs facteurs, tels que la nature chimique du matériau lui-même, laquelle détermine le coefficient d'expansion thermique, le niveau de contrainte interne mis lors de l'étape de trempe thermique, l'épaisseur du verre et la régularité de sa distribution au sein d'un même article.

L'utilisation de la centrifugation permet d'avoir des articles avec une répartition d'épaisseur relativement homogène, ainsi qu'un moindre contact moule-verre chaud. Ces deux facteurs sont favorables à l'amélioration de la résistance thermique et mécanique.

Dans la pratique, la qualité finale du verre est importante concernant la résistance des pièces puisque de petites inclusions (bulles, infondus, pierre...) même invisibles à l'oeil nu suffisent à constituer un point de faiblesse qui sera à l'origine de la casse des objets.

On entend ici par choc thermique une variation rapide de température pendant une durée donnée, notamment selon la norme EN13834 exigeant aucune casse à un choc thermique sur un écart de température de 180°C avec 3 articles pré-chauffés à 200°C puis plongés dans l'eau à 20°C ; et tenue des articles à un maintien en température à 250°C pendant 1 heure. A côté de ceci, existe également une norme EN138343 décrivant une méthodologie de test dit progressif sur 20 pièces avec un écart de température croissant, permettant de préciser la tenue au choc thermique. Enfin, des caractérisations complémentaires, proches de l'utilisation finale, sont également opportunes, notamment des tests progressifs au cours desquels seules certaines parties des articles pré-chauffés sont immergées dans l'eau à 20°C.

Par ailleurs, ledit verre est compatible avec les moyens de production maîtrisés pour le verre sodocalcique, pour éviter de devoir avoir recours à des installations dédiées. Ce point concerne notamment les outils de fusion, mais également ceux de formage qui devront intégrer l'ensemble des procédés connus. En effet, on a considéré à côté du procédé classique pressé la possibilité du procédé centrifugé, et le procédé soufflé, qui permet de constituer une gamme d'articles combinant légèreté et performance. Ces deux derniers procédés donnent généralement des épaisseurs plus fines et régulières qui sont favorables à la tenue thermique des articles. Leur maitrise demande des verres à point de fusion raisonnable comme les verres sodocalciques et non des points de fusion élevés comme certains verres vitrocéramiques.

En terme de produit, la Demanderesse a mis au point un matériau vitreux à usage de cuisson culinaire dont la formulation est substantiellement exempte d'élément volatil susceptible d'être retrouvé dans les fumées, notamment de bore. Ledit matériau permet d'éviter l'explosion d'articles lors de chocs thermiques trop importants, afin de réduire fortement le risque de blessure préjudiciable à l'utilisateur final. Ledit verre, dont les caractéristiques thermiques ont été optimisées, avec notamment un coefficient d'expansion thermique de moins de 75. 10⁻⁷ K⁻¹ permet d'obtenir à la fois une bonne performance thermique et une faible fragmentation des articles.

Cinq formulations ont été préalablement identifiées puis testées en première approche au stade laboratoire, puis trois ont été ensuite considérées au stade four prototype. Une formulation a montré une amélioration significative par rapport à un verre sodocalcique V3 pris comme référence et à un autre verre V2 pris comme référence:

V1 : 74,8% SiO2;11,0% Na2O;6,0% CaO; 3,0% Al2O3; 4,0% MgO; 1,0% SrO; 0,20%SO3

V2 : 64,9% SiO2; 10,3% Na2O; 9,4% CaO; 8,5% Al2O3; 6,7% MgO; 0,2% SO3 en % massique. La composition V2 sert ici d'exemple comparatif. Plusieurs compositions de verre ont été testées au stade semi-industriel, lors de phases d'essai sur four pour prototype à chauffage gaz de capacité 50 kg de verre fondu/jour avec réalisation d'échantillons recuits sur des machines de formage. Une ultime étape de trempe en reprise a été réalisée en condition comparative, avec adaptation du profil de montée en température eu égard aux points de ramollissement différents du verre sodocalcique de référence. Les caractérisations thermiques effectuées sur ces échantillonnages comparables (une centaine de pièces produites de forme saladier) ont mis en évidence une augmentation significative des performances des articles finaux.

Quatre formulations V1, V2 pour comparaison, V3 pour comparaison et V4 pour comparaison ont été testées sur environ 25 articles sur four prototype à combustion à l'oxygène avec réalisation d'échantillons recuits sur une machine de formage de type unitaire. La forme testée est axiale de type saladier circulaire.

Puis, une centaine de pièces qualifiées de 1^{er} choix, obtenues après un tri permettant d'éliminer les défauts type bouillons, pierres..., a donc été réalisé pour chacune des deux références ainsi que le verre sodocalcique. Comme précédemment l'affinage chimique a été assuré par du sulfate de sodium.

Cette étape a d'ailleurs permis de d'apprécier que la centrifugation était plus aisée pour la composition V1 que pour la composition V2.

**[Tableau]**

| Données | **V1** | **V2** | **V3** |
|---|---|---|---|
| Formulation % massique theorique a 0,1 % près | 74,8SiO2 11Na2O 6CaO3Al2O3 4MgO 1SrO 0,2SO3 | 64,9SiO2 10,3Na2U 9,4CaO 8,5Al2O3 6,7MgO 0,2SO3 | 73,2SiO2 13,16Na2O 10,8CaO 1,3Al2O3 1,35MgO 0,2SO3 |
| CET 10⁻⁷ K⁻¹ | 71 | 75 | 87 |
| PR°C | 640 | 675 | 615 |
| Temp consigne four°C | 1500 | 1450-1500 | 1450 |
| Tension thermique MPa/K | 0,703 | 0,774 | 0,83 |

| | | | |
|---|---|---|---|
| : Tableau des caractéristiques des formulations testées dans les mêmes conditions en four d'essai | | | |

Chaque échantillonnage a été partagé en 3 lots équivalents, afin de pouvoir y appliquer des réglages et des niveaux de soufflage de trempe croissant (standard, +20%, +40%). Les profils de température ont été adaptés aux caractéristiques des verres élaborés notamment du point de ramollissement. On note l'absence de casse d'articles au niveau de l'étape de trempe en tant que telle.

Les tests de caractérisation thermique ne permettent pas de mettre en évidence des évolutions indiscutables entre les différents réglages de trempe d'une même formulation. En revanche, la composition V1 donne clairement de meilleures performances que la composition V2, ce qui concorde d'ailleurs avec le calcul du module d'Young et du coefficient d'expansion thermique donnant la tension thermique spécifique indiquée plus haut. La composition V3 donne de moins bons résultats, dont un coefficient d'expansion thermique trop élevé. La composition V2 donne un coefficient d'expansion thermique insuffisamment certain.

Des tests de corrosion statique des réfractaires du four par le verre chaud, ont donné des résultats satisfaisants.

Des mesures de viscosité à haute température ont montré que la formulation V2 donne un palier de travail très court rendant la mise en forme plus délicate à maîtriser.

Des tests sur la possibilité de coloration, qui ont montré que la formulation V1 apparait comme la plus souple pour accepter une adjonction d'oxydes colorants, en faible proportion.

Les pièces produites par pressage et même par centrifugation ont subi ensuite l'étape de trempe thermique, pour finalement passer avec succès les tests de conformités aux normes culinaires. La fragmentation obtenue est manifestement nettement plus favorable qu'en verre sodocalcique trempé.

Un test industriel de plus de 10 jours a été réalisé sur un four à verre sodocalcique industriel de capacité supérieure à 50T/J, en fonctionnement continu avec la composition V1.

Le verre culinaire de cuisson n'a posé aucun problème de compatibilité avec le verre sodocalcique, les deux transitions s'étant déroulées sans incident.

La fusion du verre culinaire de cuisson s'est réalisée correctement avec un affinage au sulfate de sodium, dont l'efficacité est manifestement plus importante ici vu le faible taux de présence dans le verre de cet élément (<0.07%). Le niveau de qualité final a été jugé parfaitement exploitable et exempt de défauts (bulle de gaz emprisonnés, infondus et/ou pierre...). Les matières premières ont été fondues dans les mêmes gammes de température et de puissance de chauffe qu'un verre sodocalcique.

Le fait que les matières premières soient pauvres en éléments volatils autres que les affinants et notamment en bore implique que les déperditions de matière par évaporation sont minimes ici, ce qui rend la production compatible avec des fours à régénérateur contrairement aux verres borosilicates exigeant des fours spéciaux.

En terme de mise en forme, le verre culinaire de cuisson a été exploité aussi bien sur les lignes de pressage que sur une ligne de centrifugation. Ainsi l'article de verre culinaire de cuisson peut être en verre pressé ou en verre centrifugé. Le soufflage est également possible.

Pour ce procédé de centrifugation, la ligne a fonctionné en continu sans problème majeur pendant toute la période de test, ne nécessitant qu'une adaptation de la température de goutte pour maintenir une viscosité adaptée. Dans les deux cas de figure, les vitesses et rendement des machines de formage n'ont pas spécialement différé entre le verre culinaire de cuisson et le verre sodocalcique pour gobelet à boire.

La centrifugation est particulièrement intéressante pour avoir des articles avec une répartition d'épaisseur homogène, ainsi qu'un moindre contact moule-verre chaud, ces deux caractéristiques étant favorables à l'amélioration de la résistance thermique et mécanique. En effet, la peau du verre de surface est plus homogène et sans défaut, les risques des sources potentielles de rupture sont minimisés. Référence est ici faite au brevet FR 3 001 451 de la Demanderesse.

En terme de traitement thermique, le verre culinaire de cuisson a été exploité sur les lignes de trempe habituellement utilisées pour le verre sodocalcique.

Enfin, les tests thermiques sur les différents articles produits ont clairement validé le passage avec succès des valeurs limites définie par la norme EN13834 pour la casse au choc thermique. Ils ont aussi illustré l'amélioration en termes de fragmentation par rapport au verre sodocalcique, spécialement sensible pour les tests dans lesquels une partie de l'article à 200°C est mis en contact avec de l'eau à 20°C.

La résistance thermique est compatible avec l'usage culinaire de cuisson. La fragmentation est dépourvue de caractère explosif. La formulation verrière massique à 0,1% près, 74,8% Si02, 11% Na20, 6% CaO, 3% Al203, 4% MgO, 1% SrO et moins de 0,2% S03 permet de satisfaire:

La compatibilité avec un four de type air/gaz avec régénérateur.

La compatibilité avec un four de type oxygène/gaz.

L'affinage au sulfate.

La compatibilité avec la coloration par les éléments connus de coloration.

La compatibilité avec les installations de fabrication de verre ménager.

L'adaptation à la centrifugation pour mettre en forme l'article.

L'adaptation au pressage pour mettre en forme l'article.

L'exploitation à des cadences et rendements comparables au verre sodocalcique.

L'absence de bore et d'élément non souhaitable,

Un niveau de contrainte interne après trempe modéré.

La conformité aux exigences de résistance thermique de la norme EN13834.

Une fragmentation maitrisée et douce en cas de casse.

Une élaboration avec uniquement de la composition verrière est possible mais le calcin permet de faciliter et d'accélérer la cinétique de fusion.

Des échantillonnages assez conséquents ont permis de réaliser l'ensemble des caractérisations thermiques mais également mécaniques.

Des tests de chocs thermiques en plongée dans l'eau, dont les résultats positifs ont permis la validation de la conformité par rapport aux seuils définis dans la norme EN13834 (aucune casse après un choc thermique plongé dans l'eau ΔT=180°C sur 3 articles et tenue des articles 1h à 250°C). L'estimation de la résistance thermique selon le protocole défini dans la norme EN1183, c'est-à-dire le suivi des casses lors de test progressif sur 20 articles plongés dans l'eau a été satisfaisante. L'estimation de la résistance en suivant les casses lors de tests progressifs sur 10 articles dont le fond uniquement est plongé dans l'eau, au-delà de la norme, a été satisfaisante. Un test de remplissage de 5 articles à 20°C par de l'eau préchauffée à 90°C a été satisfaisant.

Il apparait clairement que la résistance à différents chocs thermiques du verre culinaire de formulation V1 est très supérieure à celle du verre de formulation V3 et à celle du verre de formulation V4.

La formulation V1 permet l'obtention d'un verre incolore et apte à la coloration, une montée en régime du four satisfaisante et un fonctionnement avec du calcin de verre de cuisson. Une diminution de CaO en deçà de la limite inférieure est néfaste pour le coefficient d'expansion thermique.

**[Tableau]**

| | **V1** | **V2** | **V3** | **V4** |
|---|---|---|---|---|
| **Oxydes** | % massique | % massique | % massique | % massique |
| **SiO₂** | 74,80 | 64,90 | 72,75 | 73,80 |
| **Al2O3** | 3,00 | 8,50 | 1,50 | 2,00 |
| **K2O** | 0 | 0 | 0 | 1,50 |
| **Na2O** | 11,00 | 10,30 | 13,35 | 11,50 |
| **Li2O** | 0 | 0 | 0 | 0 |
| **MgO** | 4,00 | 6,70 | 1,40 | 10,00 |
| **CaO** | 6,00 | 9,40 | 10,80 | 0,50 |
| **BaO** | 0 | 0 | 0 | 0 |
| **ZnO** | 0 | 0 | 0 | 0 |
| **B2O3** | 0 | 0 | 0 | 0 |
| **SrO** | 1,00 | 0 | 0 | 0,50 |
| **TiO2** | 0 | 0 | 0 | 0 |
| **ZrO2** | 0 | 0 | 0 | 0 |
| **%tot** | 99,80 | 99,80 | 99,80 | 99,80 |
| CET 10-7 K⁻¹ | 73,9 | 76,5 | 87,7 | 75,8 |
| Tg°C | 583 | 626 | 565 | 588 |
| PR°C | 640 | 663 | 605 | 639 |
| Densité | 2,43 | 2,53 | 2,51 | 2,44 |
| Tf (log2)°C | 1560 | | 1430-1450 | |
| | | | | |

avec CET le coefficient d'expansion thermique, Tg la température de transition vitreuse, PR le point de ramollissement, et Tf(log2) la température de fusion estimée d'après le log2 de la viscosité.

La recherche de source de matière première, notamment pour l'oxyde de magnésium a mené au choix préféré de la dolomie déjà utilisée en verre sodocalcique.

Des travaux ont été engagés sur la recherche d'un verre culinaire de cuisson transparent. Parmi ses caractéristiques, on vise à ce que sa formulation soit sensiblement exempte d'élément volatil, notamment d'oxyde de bore.

## Revendications

1. Composition de verre culinaire de cuisson à basse teneur en bore, comprenant en masse SiO₂ + Al₂O₃ plus de 73,0%, CaO + MgO au moins 8,0%, SiO₂ de 70,0 à 78,0%, Na₂O de 8,0 à 12,0%, CaO de 4,0 à 8,0%, Al₂O₃ moinsde 5,0%, MgO de 3,0 à 11,0 %, K₂O moins de 2,0%, SrO moins de 5,0%, SO₃ moins de 0,25% et B₂O₃ moins de 0,20%, présentant une température de transition vitreuse Tg inférieure à 700°C, préférablement inférieure à 640°C, un coefficient de dilatation inférieur à 75,0 10⁻⁷ K⁻¹ et une tension thermique spécifique inférieure à 0,75 MPa/K.

2. Composition selon la revendication 1, dans laquelle le point de fusion est inférieur à 1600°C, préférablement inférieur à 1570°C.

3. Composition selon l'une des revendications précédentes, comprenant en masse : SiO₂ + Al₂O₃ plus de 76,0%, CaO + MgO au moins 9,0%, SiO₂ de 72,0 à 78,0%, Na₂O 10,0 à 12,0%, CaO 4,0 à 8,0 %, Al₂O₃ de 1,0 à 5,0%, SrO moins de 1,5%, B₂O₃ sans apport volontaire.

4. Composition selon l'une des revendications précédentes, comprenant en masse : Al₂O₃ de 1,6 à 4,0%, préférablement 1,7 à 3,0%.

5. Composition selon l'une des revendications précédentes, comprenant en masse : SiO₂ de 74,0 à 76,0%, Na₂O de 10,0 à 12,0%, Al₂O₃ de 2,0 à 4,0%, MgO de 3,0 à 5,0 %, K₂O moins de 1,0%, SrO au plus 1,0%, SO₃ moins de 0,25% et B₂O₃ moins de 0,20%.

6. Composition selon la revendication 5, présentant une température de transition vitreuse Tg inférieure à 610°C, préférablement inférieure à 590°C, un point de ramollissement PR inférieur à 660°C, préférablement inférieur à 650°C, et une densité supérieure à 2,30 et inférieure à 2,48.

7. Composition selon l'une des revendications précédentes, comprenant en masse : CaO de 5,0 à 6,5%.

8. Composition selon l'une des revendications précédentes, comprenant en masse : CeO₂ moins de 0,20%.

9. Composition selon l'une des revendications précédentes, comprenant en masse : SO₃ moins de 0,10%, préférablement moins de 0,05%.

10. Composition selon l'une des revendications précédentes, comprenant en masse : BaO sans apport volontaire, TiO₂ sans apport volontaire, ZrO₂ sans apport volontaire, ZnO sans apport volontaire, As sans apport volontaire, Sb sans apport volontaire, F sans apport volontaire, Pb sans apport volontaire.

11. Composition selon l'une des revendications précédentes, comprenant en masse : SnO₂ sans apport volontaire, CI sans apport volontaire.

12. Composition présentant une température de transition vitreuse Tg inférieure à 585°C, et/ou un coefficient de dilatation inférieur à 74,0 10⁻⁷ K⁻¹.

13. Article de verre culinaire de cuisson de composition selon l'une des revendications précédentes.

## Patentansprüche

1. Kulinarische Glaszusammensetzung zum Garen mit niedrigem Borgehalt, umfassend in Masse mehr als 73,0 % SiO₂ + Al₂O₃, mindestens 8,0 % CaO + MgO, 70,0 bis 78,0 % SiO₂, 8,0 bis 12,0 % Na₂O, 4,0 bis 8,0 % CaO, weniger als 5,0 % Al₂O₃, 3,0 bis 11,0 % MgO, weniger als 2,0 % K₂O, weniger als 5,0 % SrO, weniger als 0,25 % SO₃ und weniger als 0,20 % B₂O₃, die eine Glasübergangstemperatur Tg unter 700°C, vorzugsweise unter 640°C, einen Ausdehnungskoeffizienten unter 75,0 10⁻⁷ K⁻¹ und eine spezifische Thermospannung unter 0,75 MPa/K aufweist.

2. Zusammensetzung nach Anspruch 1, wobei der Schmelzpunkt unter 1600°C, vorzugsweise unter 1570°C liegt.

3. Zusammensetzung nach einem der vorhergehenden Ansprüche, umfassend in Masse: mehr als 76,0 % SiO₂ + Al₂O₃, mindestens 9,0 % Ca0 + MgO, 72,0 bis 78,0 % SiO₂, 10,0 bis 12,0 % Na₂O, 4,0 bis 8,0 % CaO, 1,0 bis 5,0 % Al₂O₃, weniger als 1,5 % SrO, B₂O₃ ohne beabsichtigte Zufuhr.

4. Zusammensetzung nach einem der vorhergehenden Ansprüche, umfassend in Masse: 1,6 bis 4,0 %, vorzugsweise 1,7 bis 3,0 % Al₂O₃.

5. Zusammensetzung nach einem der vorhergehenden Ansprüche, umfassend in Masse: 74,0 bis 76,0 % SiO₂, 10,0 bis 12,0 % Na₂O, 2,0 bis 4,0 % Al₂O₃, 3,0 bis 5,0 % MgO, weniger als 1,0 % K₂O, höchstens 1,0 % SrO, weniger als 0,25 % SO₃ und weniger als 0,20 % B₂O₃.

6. Zusammensetzung nach Anspruch 5, die eine Glasübergangstemperatur Tg von weniger als 610°C, vorzugsweise weniger als 590°C, einen Erweichungspunkt PR von weniger als 660°C, vorzugsweise von weniger als 650°C, und eine Dichte von mehr als 2,30 und weniger als 2,48 aufweist.

7. Zusammensetzung nach einem der vorhergehenden Ansprüche, umfassend in Masse: 5,0 bis 6,5 % CaO.

8. Zusammensetzung nach einem der vorhergehenden Ansprüche, umfassend in Masse: weniger als 0,20 % CeO₂.

9. Zusammensetzung nach einem der vorhergehenden Ansprüche, umfassend in Masse: weniger als 0,10 %, vorzugsweise weniger als 0,05 % SO₃.

10. Zusammensetzung nach einem der vorhergehenden Ansprüche, umfassend in Masse: Ba0 ohne beabsichtigte Zufuhr, TiO₂ ohne beabsichtigte Zufuhr, ZrO₂ ohne beabsichtigte Zufuhr, Zn0 ohne beabsichtigte Zufuhr, As ohne beabsichtigte Zufuhr, Sb ohne beabsichtigte Zufuhr, F ohne beabsichtigte Zufuhr, Pb ohne beabsichtigte Zufuhr.

11. Zusammensetzung nach einem der vorhergehenden Ansprüche, umfassend in Masse: SnO₂ ohne beabsichtigte Zufuhr, Cl ohne beabsichtigte Zufuhr.

12. Zusammensetzung mit einer Glasübergangstemperatur Tg von weniger als 585°C und/oder einem Ausdehnungskoeffizienten von weniger als 74,0 10⁻⁷ K⁻¹.

13. Kulinarischer Glasartikel zum Garen aus einer Zusammensetzung nach einem der vorhergehenden Ansprüche.

## Claims

1. Low boron content culinary cooking glass composition comprising, by weight, SiO₂+Al₂O₃ more than 73.0%, CaO+MgO at least 8.0%, SiO₂ from 70.0 to 78.0%, Na₂O from 8.0 to 12.0%, CaO from 4.0 to 8.0%, Al₂O₃ less than 5.0%, MgO from 3.0 to 11.0%, K₂O less than 2.0%, SrO less than 5.0%, SO₃ less than 0.25% and B₂O₃ less than 0.20%, having a glass transition temperature Tg less than 700°C, preferably less than 640°C, a coefficient of expansion less than 75.0 10⁻⁷K⁻¹ and a specific thermal stress less than 0.75 MPa/K.

2. Composition according to claim 1, wherein the melting point is less than 1600°C, preferably less than 1570°C.

3. Composition according to one of the preceding claims, comprising, by weight: SiO₂+Al₂O₃ more than 76.0%, CaO+MgO at least 9.0%, SiO₂ from 72.0 to 78.0%, Na₂O 10.0 to 12.0%, CaO 4.0 to 8.0%, Al₂O₃ from 1.0 to 5.0%, SrO less than 1.5%, B₂O₃ with no voluntary addition.

4. Composition according to one of the preceding claims, comprising, by weight: Al₂O₃ from 1.6 to 4.0%, preferably 1.7 to 3.0%.

5. Composition according to one of the preceding claims, comprising, by weight: SiO₂ from 74.0 to 76.0%, Na₂O from 10.0 to 12.0%, Al₂O₃ from 2.0 to 4.0%, MgO from 3.0 to 5.0%, K₂O less than 1.0%, SrO at most 1.0%, SO₃ less than 0.25% and B₂O₃ less than 0.20%.

6. Composition according to claim 5, having a glass transition temperature Tg less than 610°C, preferably less than 590°C, a softening point PR less than 660°C, preferably less than 650°C, and a density greater than 2.30 and less than 2.48.

7. Composition according to one of the preceding claims, comprising, by weight: CaO from 5.0 to 6.5%.

8. Composition according to one of the preceding claims, comprising, by weight: CeO₂ less than 0.20%.

9. Composition according to one of the preceding claims, comprising, by weight: SO₃ less than 0.10%, preferably less than 0.05%.

10. Composition according to one of the preceding claims, comprising, by weight: BaO with no voluntary addition, TiO₂ with no voluntary addition, ZrO₂ with no voluntary addition, ZnO with no voluntary addition, As with no voluntary addition, Sb with no voluntary addition, F with no voluntary addition, Pb with no voluntary addition.

11. Composition according to one of the preceding claims, comprising, by weight: SnO₂ with no voluntary addition, Cl with no voluntary addition.

12. Composition having a glass transition temperature Tg less than 585°C, and/or a coefficient of expansion less than 74.0 10⁻⁷ K⁻¹.

13. Article of culinary cooking glass with composition according to one of the preceding claims.
